(19) Europäisches Patentamt / European Patent Office / Office européen des brevets

(11) **EP 3 060 722 B1**

(12) **EUROPEAN PATENT SPECIFICATION**

(45) Date of publication and mention
of the grant of the patent:
**21.02.2018 Bulletin 2018/08**

(21) Application number: **13824650.9**

(22) Date of filing: **21.10.2013**

(51) Int Cl.:
*E02B 9/08* (2006.01)  *E01D 18/00* (2006.01)
*E02B 3/06* (2006.01)  *E01D 15/14* (2006.01)
*E02B 3/10* (2006.01)

(86) International application number:
**PCT/IB2013/059511**

(87) International publication number:
**WO 2015/059515 (30.04.2015 Gazette 2015/17)**

(54) **DOUBLE-PONTOON-BRIDGE CONSTRUCTION OF SUBMERGED BARRIERS AND OF OFF-SHORE ROADS**

DOPPELPONTONBRÜCKENKONSTRUKTION VON UNTERGETAUCHTEN BARRIEREN UND STRASSEN VOR DER KÜSTE

CONSTRUCTION DE PONT À DOUBLE PONTON DE BARRIÈRES IMMERGÉES ET DE ROUTES AU LARGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.08.2016 Bulletin 2016/35**

(73) Proprietor: **Scheel, Hans J.**
**3805 Goldswil b. Interlaken (CH)**

(72) Inventor: **Scheel, Hans J.**
**3805 Goldswil b. Interlaken (CH)**

(74) Representative: **Clerc, Natalia**
**Isler & Pedrazzini AG**
**Giesshübelstrasse 45**
**Postfach 1772**
**8027 Zürich (CH)**

(56) References cited:
**EP-A1- 0 060 578**   **EP-A2- 0 391 736**
**FR-A6- 2 130 891**   **SU-A1- 1 020 489**
**US-A- 5 267 812**

## Description

### Field of Invention

The present invention relates to a system for the construction of submarine walls, for instance offshore tsunami barriers, to protect coasts and offshore buildings against tsunami waves and/or high sea waves from storms.

### Cross-References to Related Applications

The present application claims the benefit of the priorities of the following patent applications:

- PCT/IB2012/056613 filed on Nov. 22, 2012 in the name of Hans J. Scheel
- PCT/IB2012/057458 filed on Dec. 19, 2012 in the name of Hans J. Scheel
- PCT/IB2013/055276 filed on June 27, 2013 in the name of Hans J. Scheel
- European Patent Application No. EP13162698 filed on April 8, 2013 in the name of Hans J. Scheel
- Japan Patent Application No. JP2013-023131 filed on Feb. 08, 2013, in Japanese March 26,2013, in the name of Hans J. Scheel
- US Patent Application No. 13/861,608 filed on April 12, 2013 in the name of Hans J. Scheel

### Background

Tsunami protection measures along the coast or inside harbours often cannot withstand the power of large tsunamis as exemplified by the worldwide largest breakwater in the bay of Kamaishi, Japan. The March 11, 2011 Great East Japan earthquake caused a tsunami which destroyed most of the breakwater (Arikawa et al. 2012), besides many other breakwaters, and killed about 1000 people in Kamaishi city alone.

In a thorough study of impermeable submerged structures for tsunami damping Strusinska (2010) proposed a multi-defence line strategy against tsunami. Bryant in his impressive book (2008) describes general features of tsunamis and lists large coastal cities with Tsunami risk, five with a population above 15 million (Tokyo, New York, Osaka, Mumbai and Los Angeles), nine cities with 10 to 15 millions, and 38 coastal cities with more than 2 million population. It is a matter of time that a large tsunami may cause immense fatalities and damage.

It was shown in the cited patent applications and also published (Scheel 2013) that the most efficient protection against the catastrophic tsunami waves can be achieved when their formation is prevented. This requires a stable vertical wall at a depth of the ocean of at least 20m (better at a depth of about 200m), when the tsunami wave originating from an earthquake or a landslide still has heights between 1m and 3m, maximum 4m, and will be totally reflected at this wall. Such pressure waves have a propagation velocity $c$ in the deep ocean given by

$$c = \sqrt{(g \times h)}$$

with $g$ gravitational acceleration and $h$ the water depth. Typical values of $c$ are 700 to 800 km per hour. Since the product of the square of the wave height $A$ times velocity $c$ is constant

$$A^2 \times c = \text{constant},$$

the original Tsunami wave, at typical ocean depth of 4000m, of heights between 0.3m to 0.9 m increases to less than 2m at 200m water depth (Scheel 2013). Only by approaching a water depth of less than 20m the very high tsunami waves are formed reaching heights at the coast up to more than 10m. By the funnel effect of bays this height can be multiplied so that wave heights more than 38 m have been observed. The new off-shore tsunami barrier prevents the funnel effect.

It was shown in earlier patent applications cited above and in the publication (Scheel 2013) that a solid vertical barrier at a water depth of about 20m to 500m will totally reflect the original tsunami wave and thus prevents overtopping.

The construction of deep Tsunami barriers far from the coast by delivering pontoons and ships will be difficult. The following invention describes the construction starting from the coast by delivering the steel tubes, steel fences and the rocks by means of trucks on double- pontoon bridges which successively move seawards to the desired site of the tsunami barrier.

In view of frequent storms and high sea waves, the construction site is temporarily protected by floating horizontal steel fences held above or slightly below the sea level by means of pontoons. In combination with vertical steel fences and the pontoons a significant dissipation of the energy of the storm waves can be achieved.

State of the art systems according to the preamble of claim 1 can be found in EP0391736 and EP0060578.

## Summary of the Invention

The present invention relates to a system for constructing a submarine wall and to a method for constructing a submarine wall as defined in the claims.

According to a preferred embodiment of the invention two parallel pontoons with a gap between the two allow trucks arriving from the coast to deliver steel tubes, steel-fence rolls, and rocks. Vertical steel tubes are fixed in the ground at a horizontal regular distance corresponding to the width of the steel fences. The steel fences are lowered between the steel tubes, connected by hooks on steel rings, on both sides of the double-pontoon bridge. Rocks are inserted through the gap between the pontoons into the sea in order to fill the space between the parallel steel fences for building a stable wall. In the next step trucks deliver the concrete and steel beams for building the concrete wall and the supply road on top of the steel-fence rock wall. The empty trucks move on a single-pontoon bridge and return by U-turn to the coast or temporarily remain on a pontoon-parking site. The construction work is protected against high sea waves by an extended floating horizontal / vertical steel-fence-pontoon structure, fixed at the bottom of the sea, acting to attenuate the storm waves.

## Brief description of the drawings

Fig.1.a,b,c.  Schematic views of double-pontoon bridge with gap for inserting rocks, with assisting pontoons, and with steel-fence lowered into the sea

Fig.2.a.  Vertical steel tube, fixed at the bottom of the sea, with steel rings and hooks to connect and fix steel fences and steel ropes (schematic side view)

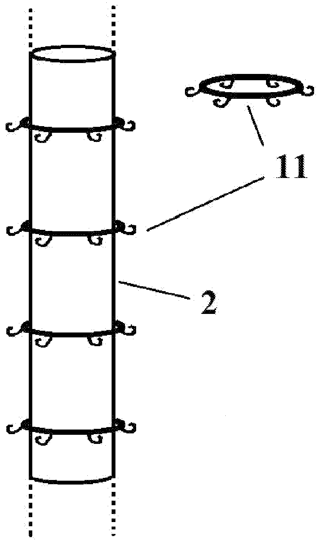

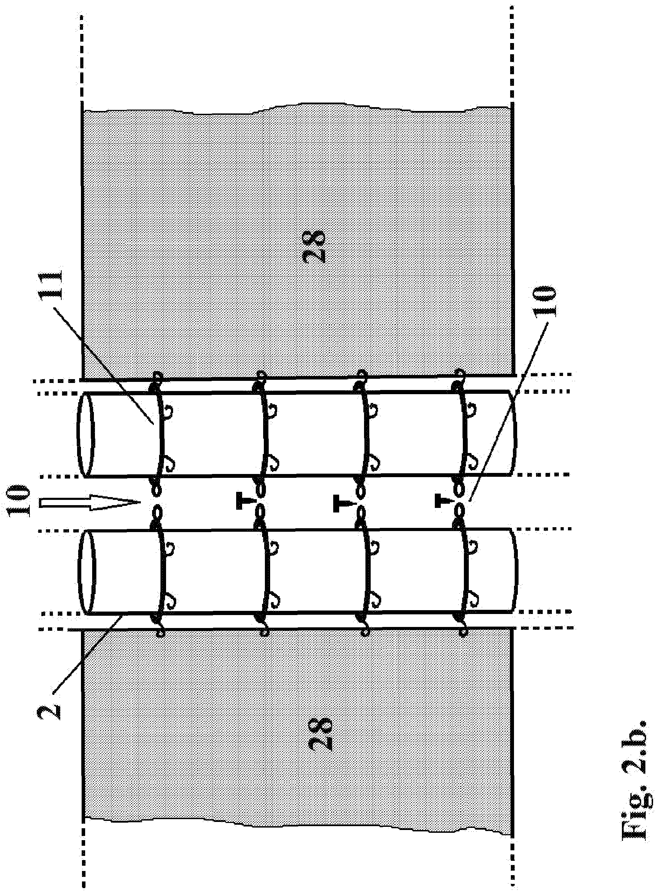

Fig.2.b.  Connection of two sequences of steel fences by two neighbouring vertical steel tubes, overlapping eyes and inserting the bolts (schematic side view)

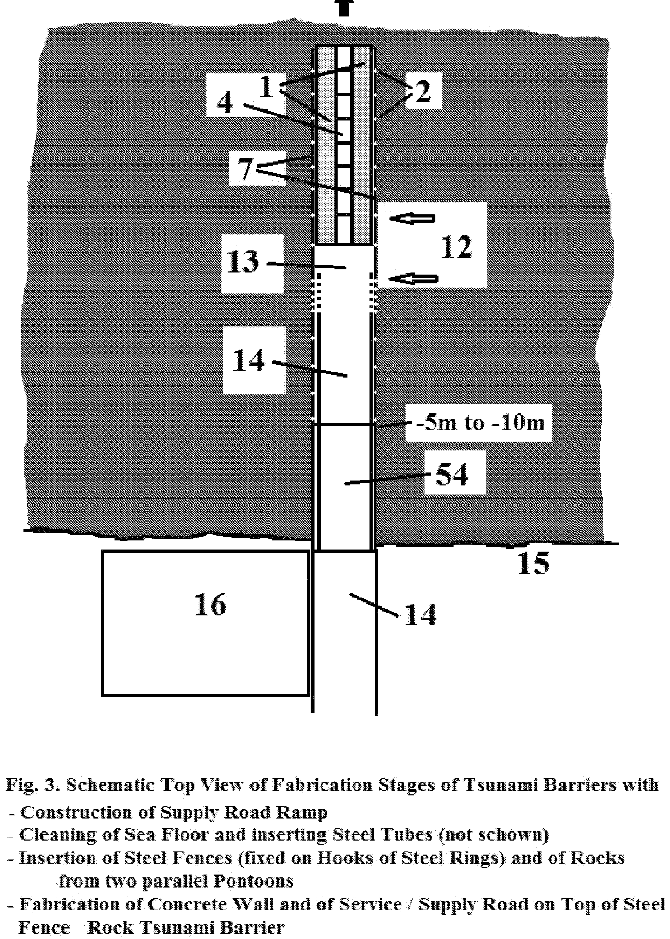

Fig.3.  Schematic top view of fabrication stages of tsunami barriers with

-cleaning of sea floor and inserting steel tubes (not shown),

-insertion of steel fences (fixed on hooks of steel rings) and of rocks from two parallel pontoons,

-fabrication of concrete wall and of service / supply road on top of the steel-fence -rock tsunami barrier

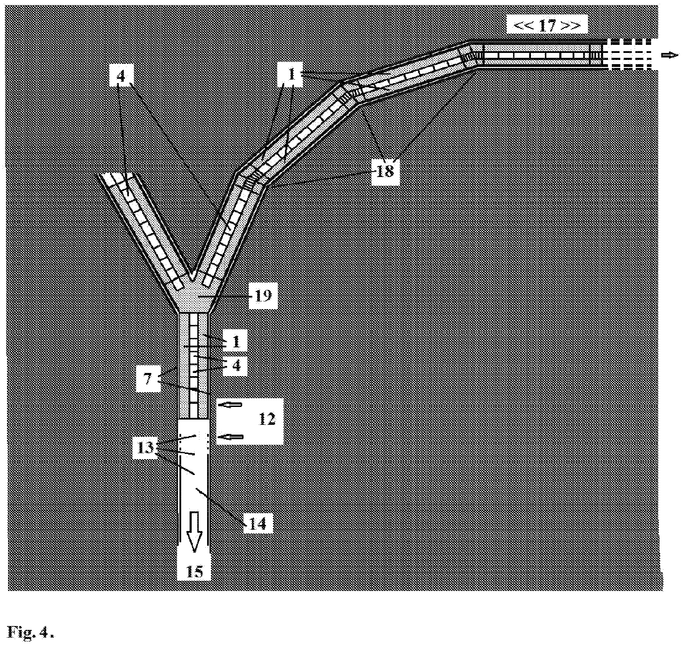

Fig.4.  Schematic top view of fabrication stages of tsunami barriers with splitting and bending of the barrier by corresponding coupling elements (assisting pontoons not shown)

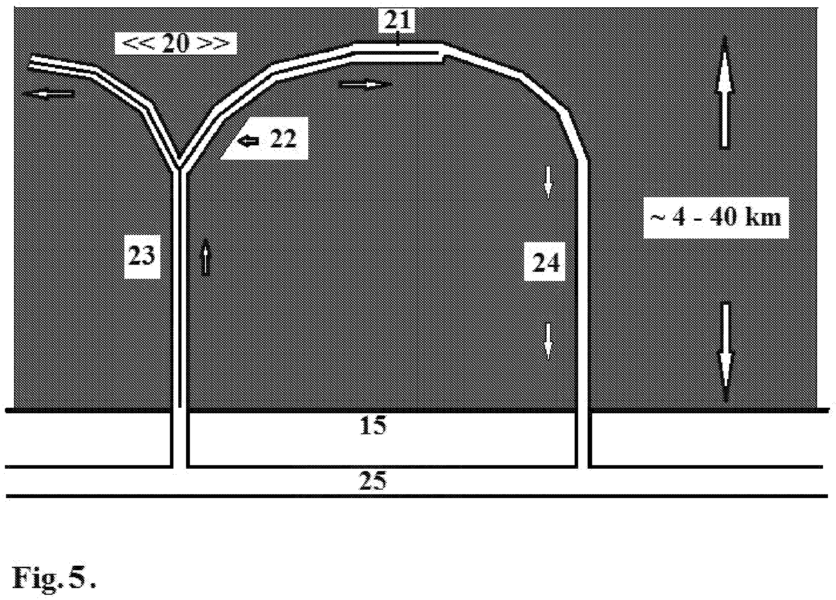

Fig.5.  Schematic top view of the double-pontoon bridges for trucks with rocks or steel-fence rolls which after delivery return to the coast on single-pontoon bridges (assisting pontoons not shown)

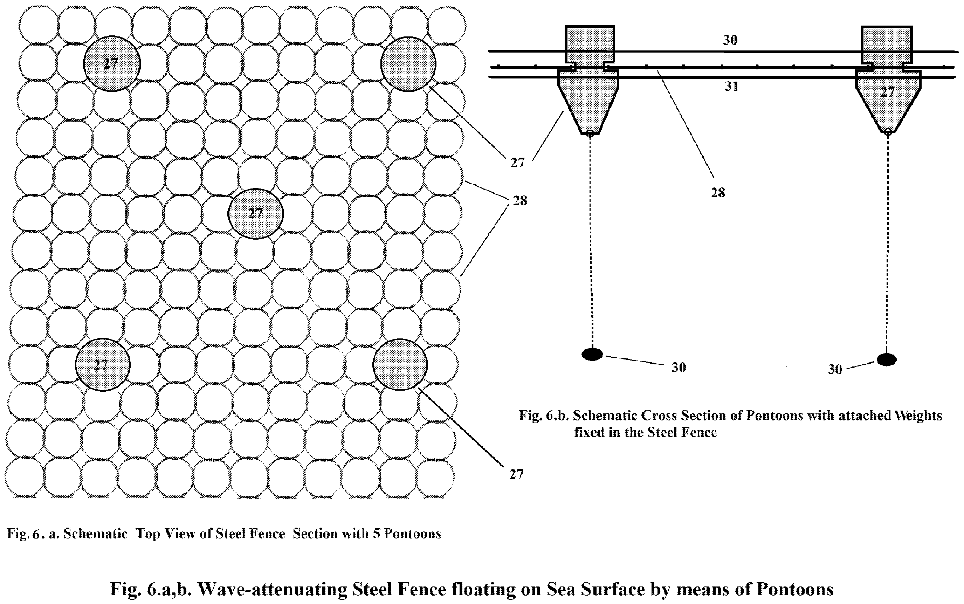

Fig.6.a,b.  Wave-attenuating steel fence floating on the sea surface by means of pontoons and fixed with chains on the seaground by means of stable foundations, heavy weights or anchors (schematic top and side views)

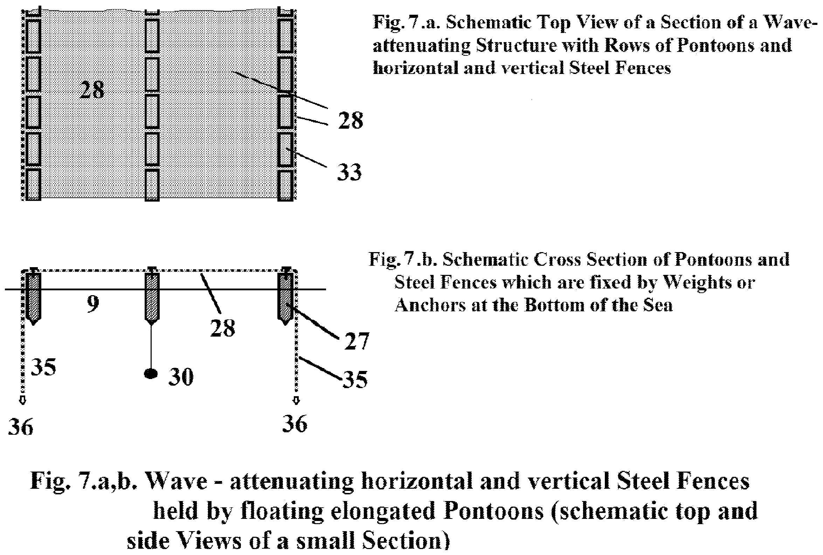

Fig.7.a,b.  Wave-attenuating horizontal and vertical steel fences held by floating elongated pontoons and fixed by chains connected to stable foundations, heavy weights or anchors at the bottom of the sea (schematic top and side views of a small section of an extended system)

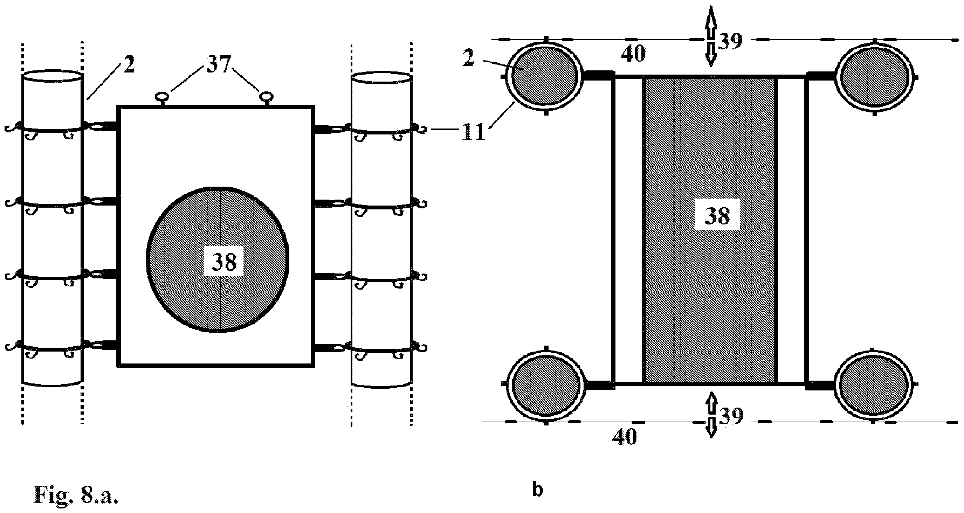

Fig.8.a.  Side view, Fig.8.b. top view of a turbine / water-wheel fixed by steel rings and inserted between four vertical steel cylinders into the tsunami barrier before the filling with rocks

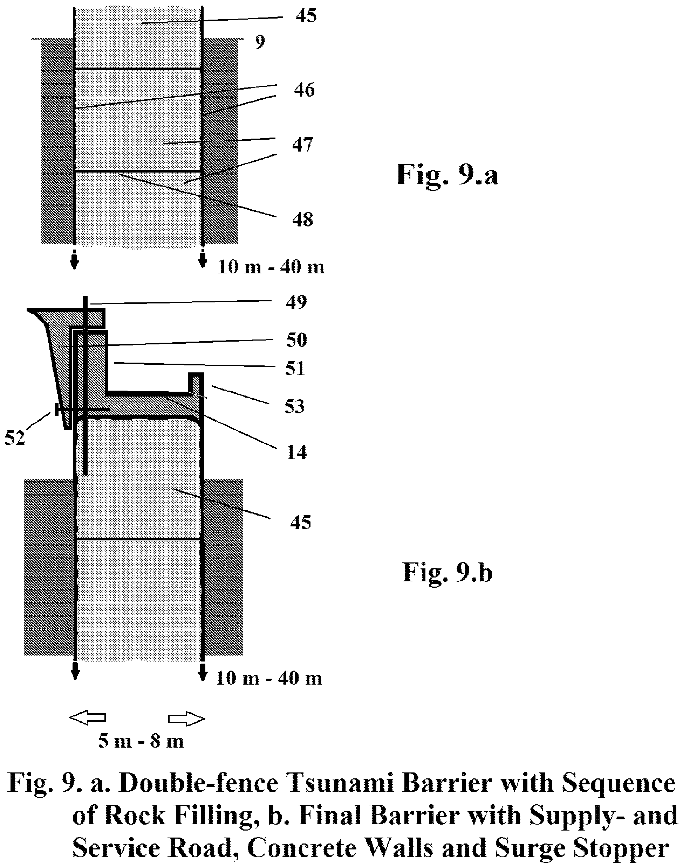

Fig.9.a,b.  Schematic cross section of double-fence tsunami barrier with sequence of rock- filling, with supply- and service road, and with concrete walls and surge stopper

## Brief description of the figure legend

1  Double-pontoon bridge, two parallel connected pontoons hanging on a frame of assisting pontoons
2  Vertical steel tubes fixed in the ground and filled with concrete
3  Rolls of steel fence
4  Opening for inserting the rocks

| 5 | Connecting beams between the two pontoons |
| 6 | Special trucks for transporting steel tubes and steel-fence rolls, and not shown dump trucks and haul trucks to transport the rocks |
| 7 | Steel fences lowered into the sea between the steel tubes |
| 8 | Rocks, rubble, other solid material, blocks of concrete, gravel, sand |
| 9 | Sea level, sea surface at high tide |
| 10 | Connection of two sequences of fences by two vertical steel tubes and overlapping eyes and inserting bolts |
| 11 | Steel ring with hooks |
| 12 | Additional supply of rocks, steel tubes, steel fences, and of concrete by ships and pontoons |
| 13 | Double-fence tsunami barrier filled with rocks finished: now fabrication of concrete wall and of service/supply road |
| 14 | Supply and service road with small slope and draining tube |
| 15 | Shore, coastline |
| 16 | Large parking area for trucks and building machines, for loading with steel-fence rolls, steel tubes and rocks, and for concrete-delivering trucks. Storage of building material. |
| 17 | Parallel to the coast |
| 18 | Coupling for bending |
| 19 | Coupling for splitting the double-pontoon bridge |
| 20 | Water depth about 40m (20m to 200m) below sea level |
| 21 | Work in progress |
| 22 | Tsunami barrier with supply road finished |
| 23 | Direction of trucks with steel-fence rolls, steel tubes, steel rings, dump trucks with rocks, and concrete mixer transport trucks |
| 24 | Return of empty trucks on single-pontoon bridges |
| 25 | Main supply road |
| 26 | Section of large steel fence with 5 small pontoons |
| 27 | Pontoon |
| 28 | Steel fence |
| 29 | Cross section/side view of steel fence and pontoons |
| 30 | Weight hanging on steel chain |
| 31 | Sea level I |
| 32 | Sea level II |
| 33 | Row of pontoons |
| 34 | Horizontal steel-fence section |
| 35 | Vertical hanging steel fence |
| 36 | Fixed by steel chains to the bottom of the sea by foundations, by heavy weights, or by anchors |
| 37 | Hooks for transport |
| 38 | Turbine, waterwheel |
| 39 | Tidal flow changes |
| 40 | Steel fence with large gaps |
| 41 | Assisting pontoons to reinforce capacity of double-pontoon bridge |
| 42 | Frame of steel tubes to carry double-pontoon bridge with heavy trucks |
| 43 | Outer walls with surge stoppers for protection against high sea waves |
| 44 | Steel chains |
| 45 | Rocks filled up after removal of double-pontoon bridge |
| 46 | Outer and inner steel fence |
| 47 | Rocks inserted from trucks on double-pontoon bridge |
| 48 | Distance holder |
| 49 | Steel beam |
| 50 | Surge stopper |
| 51 | Sea-facing concrete wall |
| 52 | Bolt |
| 53 | Coast-facing concrete wall |
| 54 | Ramp supply road |

**General description of the invention**

The basic elements of the invention consist of

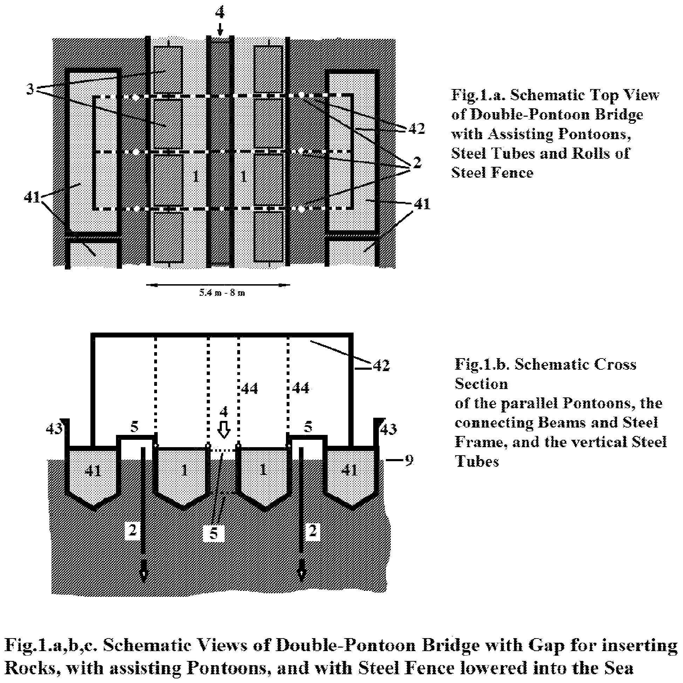

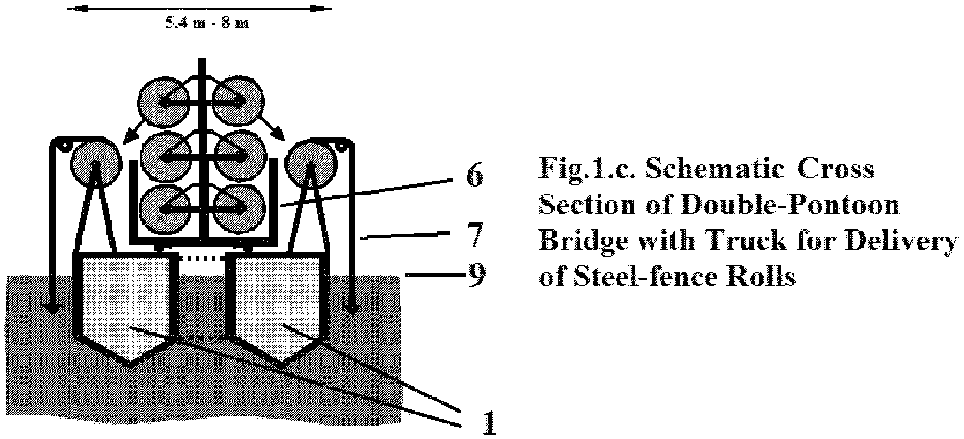

1. the double-pontoon bridge starting from the coast, connected by supply road as ramp, and allowing transport of steel tubes, steel-fence rolls, rocks, steel beams, concrete and other required material and building machines by means of specialized trucks (Fig.1).

2. the special trucks allow to deliver the steel tubes and concrete, then the steel-fence rolls to the desired site. Dump trucks or haul trucks or articulated haulers are used to transport the rocks which are falling into the sea by tilting of the dump truck (or through an opening in the truck body), into the gap between the two parallel pontoons.

3. the steel cylinders (tubes) filled with concrete are first inserted into the sea-ground at regular horizontal distances corresponding to the width of the steel fences. The side edges of the fences are connected to steel rings with hooks which allow the fences to be lowered, guided by the steel rings, along the steel tubes (Fig.2.a). The steel tubes assist to stabilize the fences and reduce their bending due to the falling rocks. The fixation with rings and hooks allows the replacement of the fence in case of damage from earthquake or ship collision.

4. A sequence of three to more than nine fences are automatically interconnected horizontally by the steel tubes and the hooks on both sides of the steel rings (Fig.2.a). Alternatively, the fences can be connected horizontally by chains of steel beams with side arms, spines and anchors as described in the December 19, 2012 application cited above.

5. Many dump trucks have to unload the rocks until the space between the two parallel fences is filled. These empty trucks return to the coast by a single-pontoon road (Fig. 5) or stay offshore at a large pontoon-based parking lot.

6. The double pontoon bridge has to be moved to the next vertical steel tubes, so that the gap between the 2m to 3m high fences can be filled with rocks delivered by ships or pontoons with cranes.

7. After finishing the basic two-fence barrier of about 3m above sea level filled with rocks, the concrete wall of about 3m height and at least 1m width and the concrete supply and service road are fabricated by applying a sea-water reistant concrete (Fig.3). Also the road has a side concrete wall, facing the coast, of at least 1m height and about 25 cm width. Furthermore both concrete walls can be provided with a surge stopper and steel beams for future heightening.

8. Steel beams extending above the concrete wall allow to hang surge stoppers, as described in the cited patent applications, to reduce both overtopping of waves and erosion of the concrete walls, see also Fig.9. Furthermore, the surge stoppers can be replaced. The steel beams facilitate future heightening of the concrete wall when required by raising sea level or by expected higher storm waves.

9. When a sequence of three or more than 9 fences is finished, the double-pontoon bridge is moved on towards the sea for the next sequence of fences. These two sequences are connected by a second vertical steel tube which is connected to the former steel tube by eyes and bolts (after the next steel fence has been lowered) as shown in Fig.2.b.

9. The splitting and bending of the double-pontoon bridge is achieved by special elements shown in Fig. 4.

## Construction data

The construction starts with building a stable supply road (ramp) from the coast, height about 2 to 3 m above sea level, by conventional or by combined steel-fence-rock technology, until a water depth is reached where the double-pontoon technology can start, between 5 m and 10 m water depth.

All steel components are fabricated from the same alloy to prevent electro-contact corrosion. This should be a saltwater-corrosion-resistant steel, for example chromium- and molybdenum-containing low-carbon steel with European numbers 1.4429 (ASTM 316LN), 1.4462, 1.4404, or 1.4571 (V4A). Painting with corrosion-resistant paint or coating with an elastic PVC or polyamide polymer may further reduce corrosion by seawater and provide long-time stability.

Steel tubes with outer diameters between 10 cm for shallow sea and up to 30 cm facing the open sea with wall thicknesses between 6 mm and about 20 mm, preferably filled with concrete, have sufficient stability to hold the steel fences filled with rocks. There are hundreds of factories for stainless-steel tubes with ArcelorMittal, Kobe Steel, Nippon Steel & Sumitomo Metal, ThyssenKrupp, U.S. Steel and Voestalpine among the largest companies.

The insertion of the steel tubes is a critical procedure for which the experience of offshore construction for oil- and gas platforms and for wind-energy towers will be useful. Transportation of the long tubes on the double-pontoon bridge will be difficult so that transport by ships or pontoons will be preferred. An alternative would be to weld shorter tubes together at the site. The tubes are delivered containing concrete, or concrete is filled into the tubes after installation. First the bottom of the sea has to be cleaned from sand and soft material by high-pressure water jets arriving through pipes or produced locally by submerged compressors or fans. A hole has to be drilled into solid ground, or a foundation of concrete used to keep the tube in place. The distance between steel tubes along one fence-line corresponds with the width of the steel fence of typically 5.9 m to 7 m: at the sea-ground this is achieved by horizontal distance holders fixed between neighbour steel tubes. The distance to the parallel fence line of typically 5.6m to 8m, minimum 5m, is kept constant by horizontal steel beams or anchors and inserted rocks as described in the December 19, 2012 application. This stabilization reduces the demands for the steel tube diameter and wall thickness significantly.

The steel rings with hooks and eyes have sufficient tolerance to glide down along the steel tube together with the attached steel fences on both sides. The thickness of ring, hooks and eyes will be between two and five cm.

Also the strength of the steel fence will match the local requirements by increasing with water depth. For economic reasons the type of fence will change also according to the distance from the coast. The preferred wire thickness will be 3 to 4 mm, the rolls of fences of length of 10 m to 45m have diameters of 30 to 120 cm. Various types of high-strength steel fences are produced by Geobrugg, Romanshorn, Switzerland (www.geobrugg.com). The stability of the fences can be increased by outside crossing steel ropes or chains fixed to the verticl steel tubes. Furthermore can the stability of the steel-fence-rock barrier be increased by buttresses, by pillars fixed at an angle of about 45 degrees in the seabed on the coastal side of the barrier.

Pontoon bridges or floating bridges have been used from ancient times with main experience in military applications (crossing of rivers). They can be built to carry heavy loads like tanks, and some pontoon bridges are used permanently for road (US Interstate) traffic. For the example discussed below the double-pontoon bridge should be able to carry loads up to 100 tons per the fence -dependent unit length of 5.9 m to 7 m.. This is achieved by connected side pontoons ("assisted pontoons") which help to carry the double pontoons by chains attached to the points of the vertical steel tubes as shown in Fig.1. Furthermore these assisted pontoons have a damping effect for the ocean waves. High walls at the outside of the side pontoons will reduce the waves to enter the double-pontoon bridge.

The concrete applied for building the top walls and supply roads should have improved resistance to sea water, especially to its sulphate content. Other factors are a low water/cement ratio and very low permeability (Zacarias 2006/2007). It is recommended to spare holes in the concrete road so that after a certain period gaps formed below the road due to rock settlement can be filled by liquid concrete and vibration densification.

Candidates of rocks to be used for Tsunami barrier have varying density ranges, depending on mineral composition and voids, with consequence for the required cubic meters: Sandstone 2.2 - 2.8, limestone 2.3 - 2.7, granite and gneiss 2.6 - 2.8, basalt and diorite 2.8 - 3.0 tonnes per cubic meter. The size of the rocks (or rubble) should fit into the gap of the double-pontoon, but should not pass through the gaps of the fence and best be in the range of 40 to 90 cm. Rounded rocks tend to move later so that rocks with edges are preferred. In order to settle the rocks, the vibration shock with heavy weights can be used, see the June 27, 2013 application. Alternatively in Japan the frequent earthquakes eventually will settle the rocks. The rock-fence structure can further be stabilized by inserting gravel every 2 to 5 m rock level, or by covering the rocks from time to time, during the insertion process, by horizontal steel fences or by layers of concrete. In order to observe the initial steel-fence lowering and rock deposition, it is recommended to wash these early rocks. Thus the process can be monitored by strong illumination and video cameras, by divers, by diving bells, or by Remotely Operated Vehicles ROV (Elwood et al. 2004, Tarmey and Hallyburton 2004) or by Autonomous Underwater Vehicles AUV (Bingham et al. 2002, WHOI 2012).

The schematic cross section of a truck for delivery of rolls of steel fences is shown by Nr.6 in Fig. 1.c. The construction on top of the truck allows to pull up two rolls of steel fence and to lower them on both sides to the fence-lowering mechanisms on the double-pontoon bridge. The dump trucks, haul trucks or articulate haulers carry loads of rocks and gravel up to 70 tons limited by the capacity of the double-pontoon bridge and by the local bridge and road restrictions on land. Producers of such dump trucks are Caterpillar, Daimler/ Mercedes Benz, Hitachi, Komatsu, Liebherr, Tata, Terex and Volvo, among others. For filling 1km of a double-fence barrier of 5.6m thickness and 40m depth, about 7000 truck loadings of 71 tons each are required. For a barrier of 30m depth the truck loadings are reduced to about 5000. Some of the filling may be achieved by excavating local material from the seaground. The number of truck loadings can be reduced when the capacity of the double-pontoon bridge is increased, for instance to 150 tons per fence-length unit, by corresponding side "assisting" pontoons.

A schematic cross section of the double-pontoon bridge together with the side pontoons and the steel tubes is shown in Fig.1.a and Fig. 1.b. A cross section of the upper part of the final tsunami barrier of 10 m to 40 m water depth is shown in Fig. 9.a,b. with indication of the sequence of rock filling. The top section (45) can only be filled after the double-pontoon bridge has been moved on.

Table 1 (see below) provides the tsunami wave heights depending on water depth and assumed original wave heights, at ocean depth of 4000m, of 0.3m, 0.9m (and for the extreme case of 1.5m) for the original wave velocity of 713km/hour. This shows the advantage of tsunami barrier height of at least 200m, but for the chance of realization the barrier height of 30m to 40m is proposed. Barriers less than 20m high may lead to catastrophic tsunami waves of more than 4m. In any case the barriers should not enter bays and harbours to prevent the funnel effect with multiplied wave heights, instead bays and harbours should be crossed even at large water depths. Historical tsunami research and actual measurements should evaluate the highest expected offshore tsunami waves in order to establish the height of the tsunami barrier to be constructed, or to increase the height after the barrier has been built.

| Table 1: | Wave heights and wave velocities for original Tsunami speed of 713 km/hour at ocean depth of 4000m | | | |
|---|---|---|---|---|
| Wave height at | | | | velocity km/hour |
| 4000m depth | 0.3m* | 0.9m* | (1.5m) | 713 |
| 200m depth | 0.63m | 1.9m | (3.2m) | 160 |
| 40m depth | 0.95m | 2.85m | (4.74m) | 71 |
| 30m depth | 1.02m | 3.05m | (5.09m) | 62 |
| 20m depth | 1.13m | 3.39m | (5.64m) | 50 |
| * Assumed typical values | | | (extreme cases in brackets) | |

The transport of sand towards the front of the Tsunami barrier may reduce the protective height of the barrier and therefore a height tolerance should be considered, or this sand excavated and moved to the coastal side of the barrier. On the other hand, removal of sand during or after construction of the barrier will increase its height for improved tsunami protection.

Depending on the slope of the continental shelf, the desirable depth of the tsunami barrier may be outside the international three-mile zone. If a country can not extend this 3-mile zone, the tsunami barrier has to be enforced and heightened according to the reduced depth of the sea at three miles distance from the coast, as can be estimated from above equations and from the table.

These equations do neither consider the morphology of the local sea-ground nor very shallow water, but still are useful. Ridges parallel to the coast will modify the equations and reduce the wave height somewhat by partial reflection. Ridges making a sharp angle towards the coast may locally increase the height of tsunami waves due to the funnel effect.

## Protection of the construction site against high sea waves from storms

These works need to be done at relatively quiet sea. In view of frequent storms and high sea waves, a wave-damping structure has been invented as shown in Fig. 6 and Fig. 7. A large horizontal steel net, with lateral dimensions between 50m and 500m, is held floating by means of small pontoons or light-weight bodies (Fig.6), and its position is fixed by chains or steel ropes connected to stable foundations or heavy weights or anchors on the sea-ground. Fig. 7 shows a row of long pontoons which themselves assist to wave damping. The horizontal pontoon-steel-fence with long pontoons can be enforced by a hanging deep steel fence on the sea-side as a weight and acting to reduce the energy of the arriving tsunami wave, in addition to reducing the power of storm waves. These pontoons with combined horizontal and vertical steel fences are schematically shown in Fig. 7.a and 7.b. The openings of the horizontal and vertical steel fences determine the water penetration as a function of the angles between wavefront and the actual steel-fence surface, and thus determine the energy dissipation of the waves. Also the total mass of the fence-pontoon structure helps to increase the attenuation efficacity as it counteracts mainly the rising waves. The attenuation effect will be reduced when due to small penetration the steel fence partially follows the wave motion up and down. With theoretical estimations and numerical simulations the required size of these fence-pontoon structures has to be found and experimentally tested. The damping mechanism of vertical fishing farm net structures with openings up to 25 mm has been studied by Lader et al. (2007). By intuition the width of the fence towards the open sea in our case should not be much smaller than 100m, and the diameter of the circular steel rings of the fence could be 30 to 35 cm. Also the shape and size of pontoons will have an impact on the efficiency of these wave attenuators (Here the study of Koraim (2013) about suspended horizontal rows of half pipes is of interest). It is important that hese pontoon-fence structures are fixed by steel ropes or chains to the bottom of the sea by solid foundations or by heavy weights or by anchors.

Until the stable Tsunami barriers are built, the pontoon-steel-fence structures can also be used along the coast and in harbour bays to reduce the energy of storm waves and of tsunami waves. In harbours these structures can be folded to open a channel for navigation, and closed in case of tsunami warning.

## Other applications of the tsunami barriers

- Large-scale fishing farms (may partially compensate whale hunting and become a significant source of fish for the respective country). Gaps in the tsunami barrier under the service roads and vertical walls are provided with nets to allow exchange of seawater and prevent escape of fishes. These gaps can be closed by gates in case of tsunami warning or oil catastrophs.

- Protection against oil catastrophes and other contamination from the sea, protection of local fauna and flora. Preserving beaches for tourism.

- Renewable electricity generation by turbines or waterwheels to be inserted into the barrier before the rocks are filled up. Fig. 8 schematically shows the introduction of a turbine into the gap between the parallel fences, whereby the vertical steel cylinders and the steel rings facilitate the procedure.

- Protection of off-shore oil and gas platforms, wind-energy towers and wind parks, pillars of bridges.

- Building of off-shore supply and service roads including pipelines for oil and gas and electric transmission lines (combined with floating roads and protected by the fence-pontoon structures).

- Reclaiming new land.

- Survival of islands, countries and land areas which will be affected by raised sea level and increased extreme storms caused by climate change.

The long-term profits of these non-tsunami applications may more than compensate the installation and maintenance expenses of the tsunami barriers.

## References

• T. Arikawa, M. Sato, K. Shimosako, I. Hasegawa, G.-S. Yeom and T. Tomita, "Failure Mechanism of Kamaishi Breakwaters due to the Great East Japan Earthquake Tsunami", Coastal Engineering (2012)1-13.
• D. Bingham, T. Drake, A. Hill, and R. Lott, "The Application of Autonomous Underwater Vehicle (AUV) Technology in the Oil Industry - Vision and Experiences", FIGXXII International Congress, Washington D.C. April 19 - 26, 2002.
• E. Bryant, "Tsunami, the underrated Hazard", second edition, Springer ISBN 978-3-540-74273-9, Praxis Publishing Ltd, Chichester UK 2008.
• N.J. Elwood, C.W.Coviello and H.C. Scott IV, "Commercial Engineer Divers: An Underwater window", Sea Technology 45(12) 2004, 35 - 38.
• A.S. Koraim, "Hydrodynamic efficiency of suspended horizontal rows of half pipes used as a new type of breakwater, Ocean Engineering 64(2013)1-22.
• P.F. Lader, A. Olsen, A. Jensen, J.K. Sveen, A. Fredheim and B. Enerhaug, "Experimental investigation of the interaction between waves and net structures-damping mechanism", Aquacultural Engineering 37(2007)100-114.
• H.J. Scheel, "New Type of Tsunami Barrier", Natural Hazards, online, DOI 10.1007/s11069-013-0834-4 (2013).
• A. Strusinska, "Hydraulic performance of an impermeable submerged structure for tsunami damping", PhD thesis 2010, published by ibidem-Verlag Stuttgart, Germany 2011, ISBN-13: 978-3-8382-0212-9.
• C. Tarmey and R. Halliburton, "Seaeye ROV uses CDL Inertial Navigation for Tunnel Survey", Sea Technology 45(12) 2004, 21 - 26.
• WHOI (2012) Woods Hole Oceanographic Institution: www.whoi.edu/main/auvs.
• Philip S. Zacarias, "Alternative cements for durable concrete in offshore environments",www.brederoshaw.com/literature/techpapers/BrederoSha w_T (2006/2007).

## Claims

1. System for constructing a submarine wall (13), such as a tsunami barrier, which is essentially made of a double-fence structure, the space between said fences being filled with rocks or rubble or concrete blocks (8); said system being a double-pontoon bridge (1) comprising two parallel pontoons (27) separated by a gap broad enough to let said rocks being immersed through it and wherein each pontoon contains fence-expending means for temporarily holding and immersing the fences into the sea, **characterized in that** the system furthermore comprises tube inserting means for inserting vertically oriented steel tubes (2) filled with concrete for mounting and fixing two adjacent fences (28).

**2.** System according to claim 1 wherein said double-pontoon bridge is adapted in a way as to let trucks move on it.

**3.** System according to anyone of the previous claims comprising assisting pontoons which are connected on one side or on both sides to said double-pontoon bridge by means of a frame of steel tubes or steel profiles from which the double-pontoon bridge is hanging by steel chains or ropes.

**4.** Method for constructing a submarine wall comprising the following steps :

- building a stable road as a ramp with a water depth allowing to connect to a system as defined in claim 1,
- moving and positioning the system as defined in claim 1,
- bringing unexpended fences (3) on said pontoons,
- expending and immersing said fences and fixing their basis on the sea ground,
- horizontally connecting said fences with hooks of rings (11) which are surrounding the vertical tubes, or by mechanical clamps, to form an extended continuous fence line,
- bringing rocks or rubble or concrete blocks on said pontoons,
- immersing said rocks through the gap formed between said two pontoons of the double-pontoon bridge.

**5.** Method according to claim 4 comprising furthermore the following steps :

- extending the tube and fence height to at least 2m above sea-level at high tide,
- filling the gap between the fences with rocks from ships or pontoons after the double-pontoon bridge has been moved to the next construction site,
- building a supply road (14) on top of the fence-rock structure,
- building concrete walls seaside and coast side on top, with steel beams extending above the concrete, and thus protecting the concrete service/supply road against storm waves.

**6.** Method according to claim 5 comprising furthermore the following steps :

- providing the concrete walls with surge stoppers hanging on said vertical steel beams, to reduce overtopping and to protect the concrete walls against erosion, with possibility to exchange or replace the surge stoppers (50).

**7.** Method according to anyone of claims 4 to 6 comprising the insertion, from ships or pontoons, of turbines or waterwheels (38) within the tsunami barrier, between the insertion of fences and before inserting the rocks, without using the double-pontoon bridge, in order to generate electricity from tidal water flows.

**8.** Method according to anyone of claims 4 to 6 comprising the insertion of steel nets in gaps of the tsunami barrier in order to exchange sea water and to keep fish of fishing farms from escaping, whereby the gaps can be closed by gates in case of tsunami or oil warning and whereby the tsunami barrier is connected at both sides to the coast thus forming a closed reservoir for fish farming.

**9.** Method according to anyone of claims 4 to 8 comprising furthermore the temporary protection of the barrier construction work by extended horizontal steel fences floating by means of pontoons or light-weight bodies, assisted with vertical hanging steel fences, and kept in position by fixation to the sea ground by means of chains or ropes connected to stable foundations or to heavy weights or to anchors.

**10.** Method according to claim 9 wherein said horizontal and vertical steel fences have, by means of holes of 10cm to 50cm diameter, a permeability for seawater which is optimized, in combination with hanging weights and fixation to the seabed, to attenuate the energy of sea waves from storms.

**11.** Method according to anyone of claims 4 to 8 comprising the arrangement of overlapping barrier openings on the seaside, or channels between two barriers, to allow navigation and access to the open sea, whereby the openings may be closed by gates in case of tsunami or oil warning.

**Patentansprüche**

**1.** System zum Bau einer Unterwassermauer (13), wie beispielsweise einer Tsunami-Barriere, welche im Wesentlichen aus einer Doppelzaun-Struktur gemacht ist, wobei der Abstand zwischen den Zäunen mit Steinen oder Schutt oder Betonblöcken (8) gefüllt ist, wobei das System eine Doppelpontonbrücke (1) mit zwei parallelen Pontons (27) ist, welche durch einen Abstand voneinander getrennt sind, der breit genug ist, um die genannten Steine durch ihn einzutauchen, und wobei jeder Ponton Mittel zum Ausziehen des Zauns aufweist, um die Zäune temporär zu halten und in das Meer einzutauchen, **dadurch gekennzeichnet, dass** das System ferner Mittel zum Einsetzen von Rohren aufweist, um vertikal verlaufende, mit Beton gefüllte Stahlrohre (2) einzusetzen, um zwei benachbarte Zäune (28) zu befestigen und zu fixieren.

2. System nach Anspruch 1, wobei die genannte Doppelpontonbrücke ausgebildet ist, um Lastwagen auf ihr bewegen zu lassen.

3. System nach einem der vorangehenden Ansprüche, wobei das System Hilfspontons aufweist, welche auf einer Seite oder auf beiden Seiten mittels eines Rahmens aus Stahlrohren oder Stahlprofilen mit der genannten Doppelpontonbrücke verbunden sind, wobei die Doppelpontonbrücke mittels Stahlketten oder Stahlseilen vom Rahmen hängt.

4. Verfahren zum Bau einer Unterwassermauer mit folgenden Schritten:

   - Bauen einer stabilen Strasse als Rampe mit einer Wassertiefe, welche es erlaubt, die Rampe mit einem System wie in Anspruch 1 definiert zu verbinden,
   - Bewegen und Positionieren des Systems wie in Anspruch 1 definiert,
   - Bringen von nicht ausgezogenen Zäunen (3) auf diese Pontons,
   - Ausziehen und Eintauchen dieser Zäune und Fixieren ihrer Basis auf dem Meeresboden,
   - horizontales Verbinden dieser Zäune mit Ringhaken (11), welche die vertikalen Rohre umgeben, oder mit mechanischen Klammern, um eine ausgedehnte kontinuierliche Zaunlinie zu schaffen,
   - Bringen von Steinen oder Schutt oder Betonblöcken auf diese Pontons,
   - Eintauchen der Steine durch den Abstand, welcher zwischen den zwei Pontons der Doppelpontonbrücke gebildet ist.

5. Verfahren nach Anspruch 4, wobei das Verfahren ferner folgende Schritte aufweist:

   - Ausdehnen der Rohr- und Zaunhöhe auf mindestens 2 m über dem Meeresspiegel bei Flut,
   - Füllen des Abstands zwischen den Zäunen mit Steinen von Schiffen oder Pontons nachdem die Doppelpontonbrücke zur nächsten Baustelle bewegt wurde,
   - Bauen einer Zulieferungsstrasse (14) oben auf der Zaun-Stein-Struktur,
   - Bauen von Betonmauern meeresseitig und küstenseitig auf der Oberseite mit sich über dem Beton erstreckenden Stahlträgern und dadurch Schützen der Service-/Zulieferungsstrasse aus Beton gegen Sturmwellen.

6. Verfahren nach Anspruch 5, wobei das Verfahren ferner die folgenden Schritte aufweist:

   - Vorsehen von Betonmauern mit Wellenstoppern, welche von den genannten vertikalen Stahlträgern hängen, um Überlauf zu vermindern und um die Betonmauern gegen Erosion zu schützen, mit der Möglichkeit, die Wellenstopper (50) auszuwechseln oder zu ersetzen.

7. Verfahren nach einem der Ansprüche 4 bis 6, wobei das Verfahren zwischen dem Einsetzen der Zäune und vor dem Einfüllen von Steinen und ohne die Verwendung der Doppelpontonbrücke das Einsetzen von Turbinen oder Wasserrädern (38) von Schiffen oder Pontoons in die Tsunami-Barriere umfasst, um Elektrizität aus den Gezeitenwasserströmen zu generieren.

8. Verfahren nach einem der Ansprüche 4 bis 6, wobei das Verfahren das Einsetzen von Stahlnetzen in den Abständen der Tsunami-Barriere umfasst, um das Meerwasser auszuwechseln und um Fische von Fischfarmen an einer Flucht zu hindern, wobei die Abstände im Falle einer Tsunami- oder einer Ölwarnung mittels Toren schliessbar sind und wobei die Tsunami-Barriere auf beiden Seiten mit der Küste verbunden ist, wodurch ein geschlossenes Reservoir für eine Fischfarm gebildet ist.

9. Verfahren nach einem der Ansprüche 4 bis 8, wobei das Verfahren ferner den temporären Schutz der Bauarbeiten der Barriere durch ausgedehnte horizontale Stahlzäune umfasst, wobei die Zäune mittels Pontons oder Leichtgewichtkörpern schwimmen, unterstützt von vertikal hängenden Stahlzäunen, und durch Fixierung auf dem Meeresgrund in Position gehalten sind durch Ketten oder Seilen, welche mit stabilen Fundamenten oder mit Schwergewichte oder mit Anker verbunden sind.

**10.** Verfahren nach Anspruch 9, wobei die genannten horizontalen und vertikalen Stahlzäune mittels Löchern von 10 cm bis 50 cm Durchmesser eine Permeabilität für Meereswasser haben, welche in Kombination mit dem Aufhängen von Gewichten und der Fixierung auf dem Meeresboden optimiert ist, um die Energie von Meereswellen bei Stürmen abzuschwächen.

**11.** Verfahren nach einem der Ansprüche 4 bis 8, wobei das Verfahren die Anordnung von überlappenden Barriereöffnungen auf der Meeresseite oder von Kanälen zwischen zwei Barrieren umfasst, um das Navigieren und den Zugang zum offenen Meer zu ermöglichen, wobei die Öffnungen im Falle einer Tsunami- oder einer Ölwarnung mittels Toren schliessbar sind.

**Revendications**

**1.** Système de construction d'une paroi sous-marine (13), telle qu'une barrière anti-tsunami, qui est essentiellement constituée d'une structure à double panneau, l'espace entre lesdits panneaux étant rempli de roches ou de gravats ou de blocs de béton (8) ; ledit système étant un pont à double ponton (1) comprenant deux pontons parallèles (27) séparés par un espace suffisamment large pour permettre de laisser tomber lesdites roches à travers lui, et chaque ponton contenant un moyen de déploiement des panneaux pour retenir et immerger temporairement les panneaux dans la mer, **caractérisé en ce que** le système comprend en outre des moyens d'insertion de tubes pour insérer des tubes d'acier orientés verticalement (2) remplis de béton pour le montage et la fixation de deux panneaux adjacents (28).

**2.** Système selon la revendication 1, dans lequel ledit pont à double ponton est prévu de manière à permettre à des camions de se déplacer sur celui-ci.

**3.** Système selon l'une quelconque des revendications précédentes, comprenant des pontons d'assistance qui sont reliés d'un côté ou des deux côtés audit pont à double ponton au moyen d'un cadre constitué de tubes d'acier ou de profilés en acier auquel le pont à double ponton est suspendu par des chaînes d'acier ou des cordes.

**4.** Procédé de construction d'une paroi sous-marine comprenant les étapes suivantes :

- construction d'une route stable sous forme de rampe avec une profondeur d'eau permettant de la connecter à un système selon la revendication 1,
- déplacer et positionner le système selon la revendication 1,
- monter des panneaux non déployés (3) sur lesdits pontons,
- déployer et immerger lesdits panneaux et fixer leur base au fond marin,
- relier horizontalement lesdits panneaux avec des crochets d'anneau (11) qui entourent les tubes verticaux, ou par des pinces mécaniques, pour former une ligne de panneaux continus déployés,
- amener des roches ou des gravats ou des blocs de béton sur lesdits pontons,
- immerger lesdites roches à travers l'espace formé entre lesdits deux pontons du pont à double ponton.

**5.** Procédé selon la revendication 4, comprenant en outre les étapes suivantes :

- prolonger la hauteur du tube et du panneau à au moins 2 m au-dessus du niveau de la mer à marée haute,
- remplir l'espace entre les panneaux avec des roches provenant de bateaux ou de pontons après que le pont à double ponton a été déplacé au site de construction suivant,
- construire une route d'approvisionnement (14) par-dessus la structure de panneaux et de roches,
- construire des parois en béton du côté mer et côté côte sur le dessus, avec des poutres en acier s'étendant au-dessus du béton, et protégeant ainsi la route de service/d'approvisionnement du béton contre les vagues de tempêtes.

**6.** Procédé selon la revendication 5, comprenant en outre les étapes suivantes :

- fournir aux parois en béton des butées anti- déferlement suspendues sur lesdites poutres d'acier verticales pour réduire les débordements et pour protéger les parois en béton contre l'érosion, avec possibilité d'échange ou de remplacement des butées anti-déferlement (50).

7. Procédé selon l'une quelconque des revendications 4 à 6, comprenant l'insertion, à partir de bateaux ou de pontons, de turbines ou de roues à aubes (38) à l'intérieur de la barrière anti-tsunami, entre l'insertion de panneaux et avant l'insertion des roches, sans utiliser le pont à double ponton, afin de générer de l'électricité à partir du flux des marées.

8. Procédé selon l'une quelconque des revendications 4 à 6, comprenant l'insertion de filets en acier dans des espaces de la barrière anti-tsunami afin d'échanger l'eau de mer et d'empêcher les poissons d'exploitations piscicoles de s'échapper, les espaces pouvant être fermés par des grilles en cas de tsunami ou de signalisation d'huile dans l'eau, la barrière anti-tsunami étant connectée aux deux côtés à la côte pour ainsi former un réservoir fermé pour la pisciculture.

9. Procédé selon l'une quelconque des revendications 4 à 8, comprenant en outre la protection temporaire de l'ouvrage de construction de barrière par des panneaux en acier horizontaux prolongés flottant au moyen de pontons ou de corps de poids léger, aidés de panneaux en acier verticaux suspendus, et maintenus en position par la fixation au fond marin au moyen de chaînes ou de cordes connectées à des fondations stables ou à des poids lourds ou à des ancres.

10. Procédé selon la revendication 9, dans lequel lesdits panneaux en acier horizontaux et verticaux présentent, au moyen de trous de 10 cm à 50 cm de diamètre, une perméabilité à l'eau de mer qui est optimisée, en combinaison avec des poids suspendus et une fixation au fond marin, de manière à atténuer l'énergie des vagues de la mer provenant de tempêtes.

11. Procédé selon l'une quelconque des revendications 4 à 8, comprenant l'agencement d'ouvertures de barrière se chevauchant sur le côté mer, ou de canaux entre deux barrières, pour permettre la navigation et l'accès à la pleine mer, les ouvertures pouvant être fermées par des grilles en cas de tsunami ou de signalisation d'huile dans l'eau.

Fig.1.a. Schematic Top View
of Double-Pontoon Bridge
with Assisting Pontoons,
Steel Tubes and Rolls of
Steel Fence

5.4 m - 8 m

Fig.1.b. Schematic Cross
Section
of the parallel Pontoons, the
connecting Beams and Steel
Frame, and the vertical Steel
Tubes

Fig.1.a,b,c. Schematic Views of Double-Pontoon Bridge with Gap for inserting
Rocks, with assisting Pontoons, and with Steel Fence lowered into the Sea

EP 3 060 722 B1

**Fig.1.c. Schematic Cross Section of Double-Pontoon Bridge with Truck for Delivery of Steel-fence Rolls**

5.4 m - 8 m

11

2

**Fig. 2.b.**

EP 3 060 722 B1

**Fig. 3. Schematic Top View of Fabrication Stages of Tsunami Barriers with**
- Construction of Supply Road Ramp
- Cleaning of Sea Floor and inserting Steel Tubes (not schown)
- Insertion of Steel Fences (fixed on Hooks of Steel Rings) and of Rocks from two parallel Pontoons
- Fabrication of Concrete Wall and of Service / Supply Road on Top of Steel Fence - Rock Tsunami Barrier

Fig. 4.

Fig.5.

Fig. 6. a. Schematic Top View of Steel Fence Section with 5 Pontoons

Fig. 6.b. Schematic Cross Section of Pontoons with attached Weights fixed in the Steel Fence

Fig. 6.a,b. Wave-attenuating Steel Fence floating on Sea Surface by means of Pontoons

EP 3 060 722 B1

Fig. 7.a. Schematic Top View of a Section of a Wave-attenuating Structure with Rows of Pontoons and horizontal and vertical Steel Fences

Fig. 7.b. Schematic Cross Section of Pontoons and Steel Fences which are fixed by Weights or Anchors at the Bottom of the Sea

Fig. 7.a,b. Wave - attenuating horizontal and vertical Steel Fences held by floating elongated Pontoons (schematic top and side Views of a small Section)

EP 3 060 722 B1

Fig. 8.a.                                                                                      b

EP 3 060 722 B1

45

9

46

47

**Fig. 9.a**

48

10 m - 40 m

49

50

51

53

14

52

45

**Fig. 9.b**

10 m - 40 m

5 m - 8 m

**Fig. 9. a. Double-fence Tsunami Barrier with Sequence of Rock Filling, b. Final Barrier with Supply- and Service Road, Concrete Walls and Surge Stopper**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO IB2012056613 A, Hans J. Scheel
- WO IB2012057458 A, Hans J. Scheel
- WO IB2013055276 A, Hans J. Scheel
- EP 13162698 A, Hans J. Scheel
- JP 2013023131 A
- US 13861608 B, Hans J. Scheel
- EP 0391736 A
- EP 0060578 A


**Non-patent literature cited in the description**

- **T. ARIKAWA ; M. SATO ; K. SHIMOSAKO ; I. HASEGAWA ; G.-S. YEOM ; T. TOMITA.** Failure Mechanism of Kamaishi Breakwaters due to the Great East Japan Earthquake Tsunami. *Coastal Engineering,* 2012, 1-13
- **D. BINGHAM ; T. DRAKE ; A. HILL ; R. LOTT.** The Application of Autonomous Underwater Vehicle (AUV) Technology in the Oil Industry - Vision and Experiences. *FIGXXII International Congress,* 19 April 2002
- **E. BRYANT.** Tsunami, the underrated Hazard. Praxis Publishing Ltd, 2008
- **N.J. ELWOOD ; C.W.COVIELLO ; H.C. SCOTT IV.** Commercial Engineer Divers: An Underwater window. *Sea Technology,* 2004, vol. 45 (12), 35-38
- **A.S. KORAIM.** Hydrodynamic efficiency of suspended horizontal rows of half pipes used as a new type of breakwater. *Ocean Engineering,* 2013, vol. 64, 1-22
- **P.F. LADER ; A. OLSEN ; A. JENSEN ; J.K. SVEEN ; A. FREDHEIM ; B. ENERHAUG.** Experimental investigation of the interaction between waves and net structures-damping mechanism. *Aquacultural Engineering,* 2007, vol. 37, 100-114
- **H.J. SCHEEL.** New Type of Tsunami Barrier. *Natural Hazards,* 2013
- **A. STRUSINSKA.** Hydraulic performance of an impermeable submerged structure for tsunami damping. *PhD thesis,* 2010, ISBN 13: 978-3-8382-0212-9
- **C. TARMEY ; R. HALLIBURTON.** Seaeye ROV uses CDL Inertial Navigation for Tunnel Survey. *Sea Technology,* 2004, vol. 45 (12), 21-26
- *WHOI (2012) Woods Hole Oceanographic Institution,* 2012, www.whoi.edu/main/auvs
- **PHILIP S. ZACARIAS.** *Alternative cements for durable concrete in offshore environments,* 2006, www.brederoshaw.com/literature/techpapers/BrederoSha w_T